(19) Europäisches Patentamt
European Patent Office
Office européen des brevets

(11) EP 0 398 727 B1

## (12) EUROPEAN PATENT SPECIFICATION

(45) Date of publication and mention
of the grant of the patent:
**06.11.1996   Bulletin 1996/45**

(51) Int Cl.⁶: **G06F 12/06**

(21) Application number: **90305354.4**

(22) Date of filing: **17.05.1990**

(54) **Self-configuring memory system**

Selbstkonfigurierendes Speichersystem

Système mémoire autoconfigurant

(84) Designated Contracting States:
**DE FR NL SE**

(30) Priority: **19.05.1989   GB 8911622**

(43) Date of publication of application:
**22.11.1990   Bulletin 1990/47**

(73) Proprietor: **RESEARCH MACHINES PLC
Milton, Abingdon, Oxon OX14 4SE (GB)**

(72) Inventor: **Leach, David Wesley
Woodstock, Oxon OX7 1JH (GB)**

(74) Representative: **Unwin, Stephen Geoffrey
S.G. Unwin & Co.
Brookfurlong Farmhouse
Islip, Oxford OX5 2TJ (GB)**

(56) References cited:
**EP-A- 0 200 198          EP-A- 0 289 899
GB-A- 2 204 163          US-A- 4 787 060**

- **IBM TECHNICAL DISCLOSURE BULLETIN, vol. 22, no. 10, March 1980, pp. 4615-4616; "Automatic module detection"**
- **IBM TECHNICAL DISCLOSURE BULLETIN, vol. 32, no. 2, July 1989, pp. 81-82, New York, US; "Automatic configurability of memory daughter cards"**

**Description**

This invention relates to a self-configuring memory system particularly for a personal computer adapted to receive a plurality of add-on memory boards.

A basic personal computer is generally sold with only a small amount of system memory. Many personal computer users need to increase the available memory in order to obtain increased performance. There are an increasing number of add-on memory boards available for increasing the system memory in personal computers. This has led to a large number of possible options available to the personal computer user. Each different option requires a special memory configuration to be set.

The type of memory most commonly used in personal computers is Dynamic Random Access Memory (DRAM). The memory within the computer is divided into groups which are called "banks" of memory and each bank of memory has its own Row Address Strobes (RAS) and Column Address Strobes (CAS). In a system which has four banks of memory, there are typically four RAS and four CAS signals (one RAS and one CAS per bank) although other arrangements are possible, eg one RAS and two CAS per bank as in the arrangement described below.

When a computer is built, some of the memory banks are generally left free and some are used up. The fact that some of the banks are used means that the computer has a certain amount of memory available, but the banks that are left free can be used at a later stage in order to increase the amount of memory that the computer has available by the connection of add-on memory boards. A typical bank may have two Megabytes (2Mb) of memory built into it and so a computer with two banks used will have 4Mb of memory. The two remaining banks can each hold 2Mb so the computer can have 4Mb of memory added at a later stage giving a total of 8Mb. The add-on memory boards usually each add 2Mb to the available memory although other arrangements are possible.

In the past, as the user added memory boards to the computer, he would have to be aware which memory banks where being used and which banks were free. He would then have to choose the next consecutive bank available and select various links to connect them accordingly. The links are in the form of pairs of pins (typically two pairs per bank) joined electrically by means of a metal clip. A number of locations are provided for receiving these links, the position of the link determining which RAS and CAS signals are routed into the banks of DRAMS. The selection of the positions in which the links are inserted is dependent upon which banks are used and which are unused and is referred to as the configuration of the memory.

Thus, the user has to configure the add-on memory (or even the memory fitted as standard) taking into account where the add-on memory is fitted (ie. which connector position the memory board is inserted in) and what other memory is already connected or fitted into the system. The configuration is also likely to change as further add-on memory boards are installed in the system. To enable the user to do this, it is necessary to provide detailed instructions concerning both the type of memory to be fitted and the type already fitted.

Failure to obtain the correct configuration would lead to reduced performance and may lead to component damage.

The present invention aims to avoid these problems by providing a self-configuring memory system. Thus, according to the invention, there is provided a self-configuring memory system for a computer as claimed in claim 1.

The invention also relates to add-on memory board for use with such a system.

Preferred features of the invention will be apparent from the following description and the subsidiary claims of the specification.

The invention will now be further described, merely by way of example, with reference to the accompanying drawings, in which:

Figure 1 is a block diagram of a conventional add-on memory system;

Figure 2 is a block diagram of an embodiment of a self-configuring memory system according to the invention; and

Figure 3 is a more detailed diagram of part of the system shown in Figure 2.

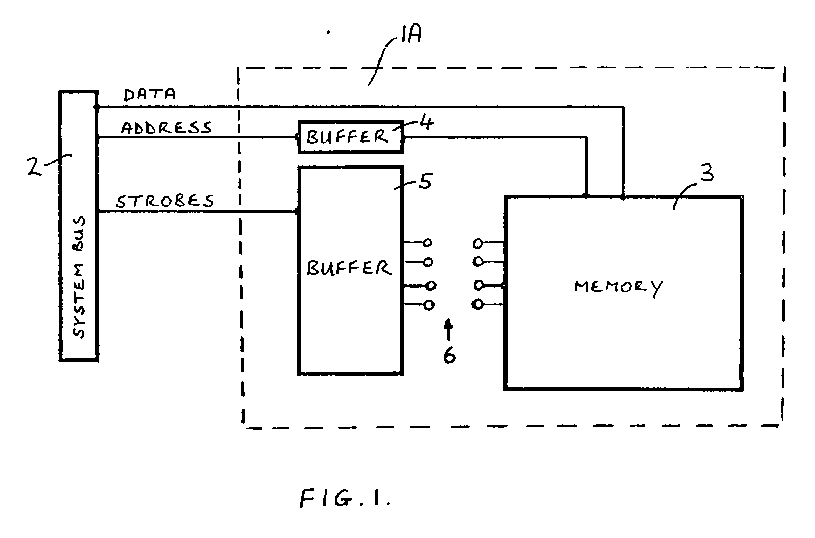

The conventional add-on memory system shown in Figure 1 comprises an add-on memory board 1A (shown by a dotted line) connected to a system bus 2 of a personal computer. A memory 3, eg comprising Toshiba TC511000 DRAMS (detailed in 'MOS Products' Data Book published by Toshiba Corporation, Tokyo, Japan), is connected to receive data from the system bus 2 and addresses therefrom via a first buffer 4, eg using 74ACT244 devices (detailed in FACT Data Book published by Fairchild Semiconductors Ltd, Potter's Bar, Herts, UK). A second buffer 5 is connected to receive strobe signals from the system bus 1 and a plurality of connector link sockets 6 are provided for routing the appropriate strobe signals to the memory 3. As described above, connector links (not shown) are inserted into the appropriate socket or sockets 6 by the user to configure the memory.

As mentioned above, in a typical computer, the memory is divided in four banks (eg numbered 0 to 3) with two banks (numbers 0 and 1) being used up and two banks (numbers bank 2 and 3) being left free for add-on memory boards, each bank being capable of having 2Mb of memory built into it. The computer may thus have two connector slots each for receiving a 2Mb add-on memory board. If a single add-on memory board is used, it must first be inserted into the appropriate connector slot and then connected by connector links in the sockets 6 to use up the next available bank, ie bank number 2. If another add-on memory board is fitted in the second slot, then its connector links must be positioned in the sockets 6 so as to use up the next memory bank, ie bank number 3.

The configuration of the memory becomes increasingly complex in computers with a larger number of memory banks and a greater number of connector slots for receiving add-on memory boards and, as mentioned above, mistakes can easily be made leading to reduced performance and possible damage to the computer.

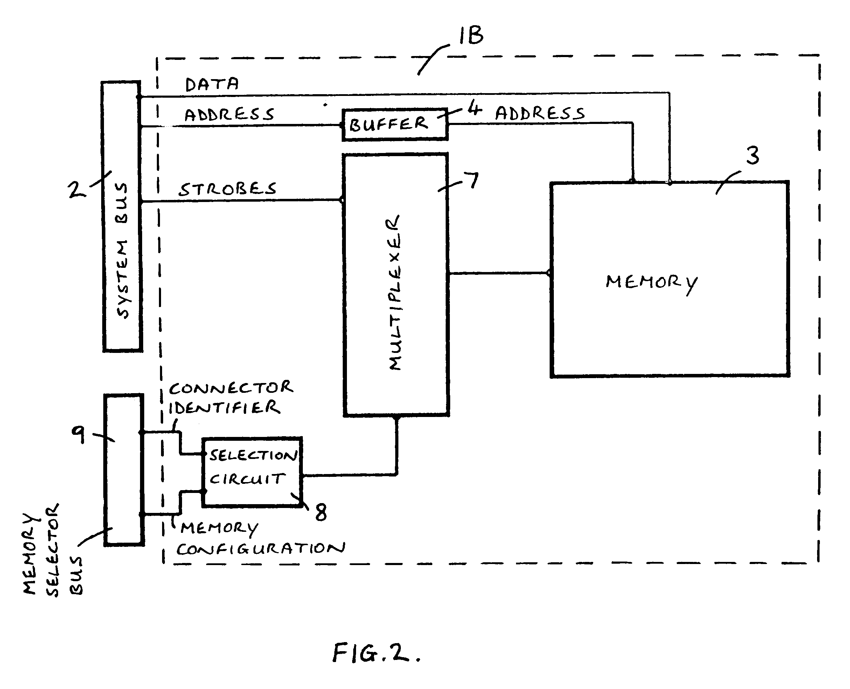

Figure 2 shows a block diagram of a memory system which automatically configures itself according to the location of the add-on memory board (ie which connector slot it is positioned in) and according to the memory already present in the computer or already added in other connector slots. This configuration is automatically carried out when the memory board is connected to the computer.

The system shown in Figure 2 comprises an add-on memory board 1B (shown by dotted lines) which is connected to a system bus 2 and comprises a memory 3 connected to receive data signals and address signals via a buffer 4 as in the conventional arrangement described above. However, in this case, the strobe signals from the system bus 2 are fed to a multiplexer 7, such as a 74ACT257 device (detailed in the 'FACT Data Book' referred to above). The multiplexer 7 is controlled by a selection circuit 8 which determines which strobe signals are routed to the memory 3. The selection circuit 8 is also connected to receive and transmit signals on a memory selector bus 9 which is connected to the various add-on memory connector slots (not shown) provided in the computer.

When the add-on memory board 1B is inserted into a connector slot, the selection circuit 8 is connected to the memory selector bus 9 and receives a signal therefrom indicating which connector slot the board 1B has been inserted into. It also receives signals indicating what other memory is connected to the system, either that already fitted in the system or that added by any other memory boards connected thereto. The selection circuit 8 also transmits a signal on the memory selector bus 9 to indicate its presence to other memory boards connected to the system.

As will be described further below, the logic of the selection circuit 8 is arranged to control the multiplexer 7 to route the appropriate strobe signals to the memory 3 or, in some cases, to disable the memory 3 in dependence upon which connector slot it has been inserted into and what other memory is connected to the system to ensure that the memory 3 is appropriately configured.

The function of the selection circuit 8 will now be described in greater detail:

The selection circuit 8 provides two control signals to two inputs of the multiplexer 7: a data select input $\overline{A}/B$ and an output enable input $\overline{G}$. The data select input $\overline{A}/B$ determines which of the strobe inputs are routed to the memory 3 and the output enable input $\overline{G}$ is used to disable the strobes completely and thus disable the memory 3. The selection circuit itself is driven by two signals: SLOT and 2MDISABLE. The SLOT signal is forced to a logic 0 when the memory board 1B is in a first connector slot and to a logic 1 when the memory board is in a second connector slot. The 2MDISABLE signal is both used by, and driven by, the selection circuit 8 and is at a logic 0 only when a memory board is in the first slot. If the 2MDISABLE signal is at logic 1, then the memory 3 is disabled. This is used to disable the memory 3 if, for instance, the memory board has been fitted into the wrong slot.

Logic signals from the selection circuit 8 control the multiplexer 7 and thus provide the self-configuring action of the system. The selection circuit 8 generates signals to perform two functions: bank selection (by controlling the $\overline{A}/B$ input), and memory disabling (by controlling the $\overline{G}$ input). The memory disabling function will override the bank selection function where necessary, so, as mentioned above, if the memory board is inserted in the wrong connector slot, the memory 3 is disabled to prevent possible damage to the computer. The circuit 8 is arranged to ensure the following:

If a memory board is placed in the first connector slot, then the memory bank number 2 is selected.

If a memory board is placed in the second connector slot and there is a memory board in the first connector slot, then the memory bank number 3 is selected.

If there is no memory board in the first connector slot, then the memory 3 in the second connector slot is disabled.

Memory banks 0 and 1 are reserved for the standard memory of the computer.
The control function can be summarised by the following logic table:

| | | Memory Board 1 | | | | Memory Board 2 | | | |
|---|---|---|---|---|---|---|---|---|---|
| Connector Slot 1 | Connector Slot 2 | SLOT signal | 2MDISABLE signal | $\overline{A}/B$ | $\overline{G}$ | SLOT signal | 2MDISABLE signal | $\overline{A}/B$ | $\overline{G}$ |
| Memory board 1 | - | 0 | 0 | 0 | 0 | - | - | - | - |
| - | Memory board 2 | - | - | - | - | 1 | 1 | 1 | 1 |
| Memory board 1 | Memory board 2 | 0 | 0 | 0 | 0 | 1 | 0 | 1 | 0 |

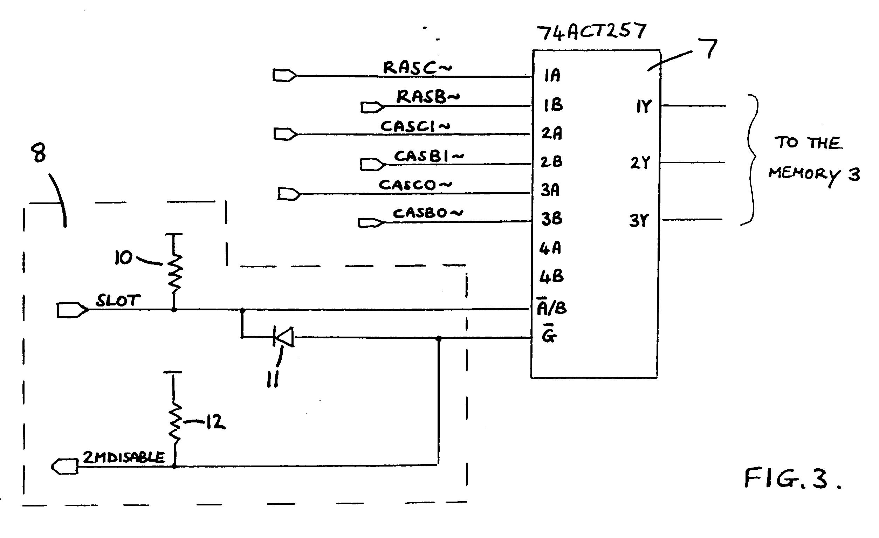

Figure 3 shows the selection circuit 8 which comprises a first resistor 10 (of 10KOhms), a diode 11, such as a BAT54 (detailed in 'Diodes' published by Mullard Ltd, London, UK), and a second resistor 12 (also of 10KOhms). As shown, the circuit is connected to receive the SLOT and 2MDISABLE signals from the memory selector bus 9 and to provide the appropriate logic signals 0 and 1 to the $\overline{A}/B$ and $\overline{G}$ inputs of the multiplexer 7. Figure 3 also shows the strobe inputs received by the multiplexer. When a logic signal 0 is applied to the $\overline{A}/B$ input, the strobes RASC, CASC1 and CASCO are routed to the memory 3 and when a logic signal 1 is applied to the $\overline{A}/B$ input, the strobes RASB, CASB1 and CASBO are routed to the memory 3 (assuming a logic signal 0 is applied to input $\overline{G}$). When a logic signal 1 is applied to input $\overline{G}$, none of the strobes are routed to the memory 3 so the memory is disabled.

The add-on memory board 1B may be used with any personal computer provided with a memory selector bus 9 between its memory connector slots.

It will be appreciated from the above description that the memory boards 1B described are completely user-safe in that no configuration by the user is required as the memory is self-configuring. The configuration is therefore always valid and possible component damage is avoided. This means that the user is at will to plug in memory boards in any physical position and a usable configuration will always be obtained.

Although the embodiment described above has only two add-on connector positions and has only four memory banks available, the invention could easily be extended to control any number of connector positions and any number of banks by simply increasing the number signals in the memory selector bus 9.

This system described is also in keeping with the requirement to hold costs low in personal computer applications as it ensures that the strobe signals are not only multiplexed, but are also buffered in one device. The system replaces the old method of using dedicated buffers and movable links and the cost difference of using the system instead of the old techniques is minimal.

## Claims

1. A self-configuring memory system for a computer capable of operating a plurality of memory banks in one or more predetermined configurations by means of strobe signals, the computer being provided with one or more memory banks (3) and having at least two connection points for connecting to add-on memory means each comprising at least one additional memory bank, the system comprising: at least one add-on memory means (1B); selector means (8) for receiving signals (SLOT, 2MDISABLE) identifying which connection point the add-on memory means (1B) is connected to and indicating any other memory banks connected to the system; communication means (9) for passing the said signals (SLOT,2MDISABLE) between all the connection points; and routing means (7) for receiving memory strobe signals from a system bus (2) and routing selected strobe signals to the additional memory bank (3) under the control of the selector means (6), the control arrangement being such that either appropriate strobe signals are routed to the additional memory bank (3) or the additional memory bank (3) is disabled depending on which connection point the add-on memory means (1B) is connected to and what other memory banks are connected to the system thereby ensuring the memory banks are used in one of the said predetermined configurations.

2. A system as claimed in Claim 1 in which the selector means (8) comprises a logic circuit arranged to receive the said signals (SLOT,2MDISABLE) from the communication means (9) and provide the appropriate control signals to the routing means (7) in accordance with a given logic table.

3. A system as claimed in Claim 1 or 2 in which the routing means (7) is a multiplexer arranged to receive the strobe signals and route selected strobe signals to the additional memory bank (3) under the control of the selector means (8).

4. A system as claimed in Claim 3 in which the selector means (8) is arranged to control memory bank selection by means of a data select input of the multiplexer (7) and to disable the additional memory bank (3) by means of an output enable input of the multiplexer (7).

5. A system as claimed in any preceding claim in which the communication means (9) comprises a memory selector bus connected between the said at least two connection points.

6. A system as claimed in any preceding claim in which the said at least two connection points comprise connector slots for receiving add-on memory means (1B) in the form of memory boards.

7. A, system as claimed in Claim 6 in which the memory is divided into four banks, e.g. each of 2Mb, with two banks being used and two being left free for add-on memory boards (1B), e.g. each of 2Mb.

8. An add-on memory board (1B) to be used in a system as claimed in Claim 6 or 7 and which comprises the selector means (8), the routing means (7), and the additional memory bank (3) and connectors for passing the memory strobe signals, the said signals (SLOT,2MDISABLE) on the communication means, data signals and address signals to and from connectors within a connector slot of the computer.

9. An add-on memory board (1B) as claimed in Claim 8 when connected to a connector slot of a computer.

**Patentansprüche**

1. Ein selbstkonfigurierendes Speichersystem für einen Computer, das in der Lage ist, in einer oder mehreren vorbestimmten Konfigurationen mit Hilfe von Strobsignalen eine Mehrzahl von Speicherbanken zu betreiben, wobei der Computer mit einer Speicherbank oder mehreren Speicherbanken (3) versehen ist und über mindestens zwei Anschlußpunkte zum Anschließen an Erweiterungsspeichermittel ausgestattet ist, von denen jedes mindestens eine zusätzliche Speicherbank aufweist, wobei das System die folgenden Teile umfaßt: mindestens ein Erweiterungsspeichermittel (1B); ein Selektionsmittel (8) zum Empfang von Signalen (SLOT, 2MDISABLE), die herausstellen, an welchen Anschlußpunkt das Erweiterungsspeichermittel (1B) angeschlossen ist und die etwaige andere an das System angeschlossene Speicherbanken anzeigen; ein Kommunikationsmittel (9) zum Übermitteln der besagten Signale (SLOT, 2MDISABLE) zwischen allen Anschlußpunkten; und ein Leitwegsteuermittel (7) zum Empfang von Speicherstrobsignalen von einem Systembus (2) und zum Leiten ausgewählter Strobsignale zu der zusätzlichen Speicherbank (3) unter Steuerung durch das Selektionsmittel (8), wobei die Steuereinrichtung so beschaffen ist, daß entweder die entsprechenden Strobsignale der zusätzlichen Speicherbank zugeleitet werden oder die zusätzliche Speicherbank (3) außer Aktion gesetzt wird, je nachdem, an welchen Anschlußpunkt das Erweiterungsspeichermittel (1B) angeschlossen ist und welche anderen Speicherbanken an das System angeschlossen sind, wodurch gewährleistet wird, daß die Speicherbanken in einer der besagten vorbestimmten Konfigurationen zum Einsatz gelangen.

2. Ein System nach Anspruch 1, bei dem das Selektionsmittel (8) eine Logikschaltung umfaßt, die so beschaffen ist, daß sie die besagten Signale (SLOT, 2MDISABLE) von dem Kommunikationsmittel (9) erhält und dem Leitwegsteuermittel (7) die entsprechenden Steuersignale im Einklang mit einer vorgegebenen Logiktafel zuleitet.

3. Ein System nach Anspruch 1 oder 2, bei dem das Leitwegsteuermittel (7) ein Multiplexer ist, der so beschaffen ist, daß er die Strobsignale empfängt und der Erweiterungsspeicherbank (3) unter Steuerung durch das Selektionsmittel (8) ausgewählte Strobsignale mit zuleitet.

4. Ein System nach Anspruch 3, bei dem das Selektionsmittel (8) so angeordnet ist, daß es die Wahl der Speicherbank mit Hilfe eines Datenwähleingangs des Multiplexer (7) steuert und die zusätzliche Speicherbank (3) mit Hilfe eines Ausgangsfreigabeeingangs des Multiplexers (7) außer Aktion setzt.

5. Ein System nach einem der vorstehenden Ansprüche, bei dem das Kommunikationsmittel (9) einen zwischen den besagten mindestens zwei Anschlußpunkten angeschlossenen Speicherselektionsbus umfaßt.

**6.** Ein System nach einem der vorstehenden Ansprüche, bei dem die besagten mindestens zwei Anschlußpunkte Einschubschlitze zur Aufnahme von Erweiterungsspeichermittein (1B) in der Form von Speicherplatten umfassen.

**7.** Ein System nach Anspruch 6, bei dem der Speicher in vier Banken untergeteilt ist, z.B. mit einer Kapazität von je 2Mb, wobei zwei Banken in Betrieb stehen und zwei für Erweiterungsspeicherplatten (1B), z.B. mit einer Kapazität von je 2Mb freibleiben.

**8.** Eine Erweiterungspeicherplatte (1B) zum Einsatz in einem System nach Anspruch 6 oder 7, umfassend das Selektionsmittel (8), das Leitwegsteuermittel (7) und die Erweiterungsspeicherbank (3) sowie Anschlüsse zum Übermitteln der Speicherstrobsignale, der besagten Signale (SLOT, 2MDISABLE) über das Kommunikationsmittel, Datensignale und Addressensignale zu und von Anschlüssen innerhalb eines Einschubschlitzes des Computers.

**9.** Eine Erweiterungsspeicherplatte (1B) nach Anspruch 8 bei Anschluß an einen Einschubschlitz eines Computers.

## Revendications

**1.** Système de mémoire à configuration automatique pour un ordinateur, pouvant exploiter plusieurs blocs de mémoire en une ou plusieurs configurations prédéterminées au moyen de signaux d'activation, l'ordinateur étant muni d'un ou plusieurs blocs de mémoire (3) et ayant au moins deux points de connexion pour connecter les moyens de mémoire additionnelle, chacun comprenant au moins un bloc de mémoire additionnelle, le système comprenant : au moins un moyen de mémoire additionnelle (1B) ; un moyen sélecteur (8) pour recevoir des signaux (SLOT, 2MDISABLE) identifiant à quel point de connexion le moyen de mémoire additionnelle est connecté et indiquant tous autres blocs de mémoire connectés au système ; un moyen de communication (9) pour faire passer lesdits signaux (SLOT, 2MDISABLE) entre tous les points de connexion ; et un moyen d'acheminement (7) pour recevoir les signaux d'activation de mémoire d'un bus système (2) et acheminer les signaux d'activation sélectionnés au bloc de mémoire additionnelle (3) sous la commande du moyen sélecteur (8), l'agencement de commande étant tel que soit les signaux d'activation appropriés sont acheminés au bloc de mémoire additionnelle (3) soit le bloc de mémoire additionnelle (3) est invalidé en fonction du point de connexion auquel le moyen de mémoire additionnelle (1B) est connecté et des autres blocs de mémoire qui sont connectés au système, et assurant ainsi que les blocs de mémoire sont utilisés dans l'une desdites configurations prédéterminées.

**2.** Système selon la Revendication 1, dans lequel le moyen sélecteur (8) comprend un circuit logique agencé pour recevoir lesdits signaux (SLOT, 2MDISABLE) du moyen de communication (9) et fournir les signaux de commande appropriés au moyen d'acheminement (7) conformément à une table logique donnée.

**3.** Système selon la Revendication 1 ou 2 dans lequel le moyen d'acheminement (7) est un multiplexeur agencé pour recevoir les signaux d'activation et acheminer les signaux d'activation sélectionnés au bloc de mémoire additionnelle (3) sous la commande du moyen sélecteur (8).

**4.** Système selon la Revendication 3, dans lequel le moyen sélecteur (8) est agencé pour commander la sélection des blocs de mémoire au moyen d'une entrée sélection de données du multiplexeur (7) et pour invalider le bloc de mémoire additionnelle (3) au moyen d'une entrée validation de sortie du multiplexeur (7).

**5.** Système selon l'une quelconque des revendications précédentes dans lequel le moyen de communication (9) comprend un bus sélecteur de mémoire connecté entre lesdits deux points de connexion ou davantage.

**6.** Système selon l'une quelconque des revendications précédentes dans lequel lesdits deux points de connexion ou davantage comprennent des alvéoles de connexion pour recevoir le moyen de mémoire additionnelle (1B) sous forme de cartes de mémoire.

**7.** Système selon la Revendication 6 dans lequel la mémoire est divisée en quatre blocs, par ex. de 2 Mo chacun, et deux blocs sont utilisés et deux autres sont laissés libres pour des cartes de mémoire additionnelle (1B), par exemple de 2 Mo chacune.

**8.** Carte de mémoire additionnelle (1B) devant être utilisée dans un système selon la Revendication 6 ou 7 et qui comprend le moyen sélecteur (8), le moyen d'acheminement (7) et le bloc de mémoire additionnelle (3) ainsi que des connecteurs pour faire passer les signaux d'activation de mémoire, lesdits signaux (SLOT, 2MDISABLE) sur le moyen de communication, les signaux de données et les signaux d'adresse vers les connecteurs intérieurs à l'alvéole de connexion de l'ordinateur et dans le sens contraire.

9. Carte de mémoire additionnelle (1B) selon la Revendication 8, lorsqu'elle est connectée à une alvéole de connexion d'un ordinateur.

FIG.1.

FIG. 2.

FIG.3.